## Europäisches Patentamt

## European Patent Office

## Office européen des brevets

(11) Veröffentlichungsnummer: **0 108 930**
**B1**

(12) # EUROPÄISCHE PATENTSCHRIFT

(45) Veröffentlichungstag der Patentschrift:
**10.12.86**

(51) Int. Cl.⁴: **F 16 D 7/06,** F 16 D 7/04,
F 16 D 43/20

(21) Anmeldenummer: **83110148.0**

(22) Anmeldetag: **12.10.83**

(54) **Überlastsicherung an Kupplungen.**

(30) Priorität: **13.11.82 DE 3242046**
**01.10.83 DE 3335729**

(43) Veröffentlichungstag der Anmeldung:
**23.05.84 Patentblatt 84/21**

(45) Bekanntmachung des Hinweises auf die Patenterteilung:
**10.12.86 Patentblatt 86/50**

(84) Benannte Vertragsstaaten:
**AT CH DE FR GB IT LI SE**

(56) Entgegenhaltungen:
**DE - A - 2 062 595**
**DE - A - 3 032 637**
**DE - B - 1 182 910**
**DE - C - 809 877**
**FR - A - 1 034 596**
**FR - A - 2 055 158**
**FR - A - 2 221 975**
**GB - A - 661 643**
**SU - A - 396 480**
**US - A - 913 475**
**US - A - 1 962 993**
**US - A - 2 461 447**
**US - A - 2 637 987**
**US - A - 2 688 857**
**US - A - 2 826 903**

(73) Patentinhaber: **Vorwerk & Co. Interholding GmbH,
Mühlenweg 17-35, D-5600 Wuppertal 2 (DE)**

(72) Erfinder: **Krämer, Rolf-Jürgen, Schwalbenstrasse 56,
D-5600 Wuppertal 2 (DE)**
Erfinder: **Helmes, Ludger, Parkstrasse 60,
D-5620 Velbert (DE)**

(74) Vertreter: **Rieder, Hans-Joachim, Dr.,
Corneliusstrasse 45 Postfach 11 04 51,
D-5600 Wuppertal 11 (DE)**

(56) Entgegenhaltungen: (Fortsetzung)
**US - A - 2 854 830**
**US - A - 3 618 310**
**US - A - 4 043 437**
**US - A - 4 327 563**

ACTORUM AG

## Beschreibung

Die Erfindung betrifft eine Überlastsicherung gemäss Gattungsbegriff des Hauptanspruches.

Bei den bekannten Bauformen dieser Art (z.B. US-A-2 637 987) ist der Rollkörper von einem Käfig gefasst. Die Bauform ist dadurch aufwendig, reibungsfördernd und arbeitet kräfteverzehrend. Insbesondere die Reibungswärme bringt eine erhebliche Unzuverlässigkeit, dies vor allem dann, wenn entsprechend diesen vorbekannten Lösungen die Ringraum-Innenwand eine keilförmig verlaufende Fläche mit Endstufe besitzt zur Bildung eines Keilraumes. Dies erhöht auch noch erheblich den Verschleiss.

Aus der SU-A-39 64 80 ist bereits bekannt, den einzelne Kugel lagernden Käfig zu ersetzen durch einen flexiblen Ring aussenseitig der dicht an dicht aber ansonsten käfiglos liegenden Kugeln. Der Ring besitzt eine auch die Kugellage ausbuchtende Einbeulung. Diese formt sich bei Überlast-Entkupplung zurück. Die Ausführung ist vor allen Dingen wegen der Vielzahl der Kugeln aufwendig und wegen des flexiblen Ringes äusserst verschleissanfällig. Aus der US-A-913 475 ist es darüber hinaus bei Kaffeemühlen bekannt, die Käfig-Halterung einer entsprechenden Einzelkugel dadurch zu ersetzen, dass das innere Antriebselement eine Einlagerungsnische für die Kupplungskugel besitzt und das äussere Abtriebselement eine in den Ringraum zwischen beiden Elementen frei hineinragende Feder besitzt, die mit ihrem hakenförmig abgebogenen Ende die Kugel an der der Einlagerungsnische gegenüberliegenden Seite übergreift. Bei Überlast-Entkupplung wird dieser federnde Übergriff aufgehoben, und die Kugel gelangt in den Bereich einer zweiten Auffang-Feder, die in den Ringraum ragt. Aus dieser Position muss die Kugel dann durch Öffnen des gesamten Kupplungsgehäuses wieder entfernt und frei in den Ringraum gebracht werden. Diese Lösungen sind ebenfalls relativ aufwendig, verlangen äusserst geringe Toleranzen, bedingen einen hohen Verschleiss, insbesondere im Bereich der Einlagerungsnische und des hakenförmig übergreifenden Federendes und bringen auch einen ruckartigen Entkupplungsvorgang, bei dem das freie Federende dann sogar mit Beschädigungsgefahr über die Kugelfläche kratzt. Auch ist die Bedienung wegen der Notwendigkeit einer Öffnung des Gehäuses zur Herstellung einer neuen Betriebsstellung gebrauchstechnisch nachteilig. Darüber hinaus ist es aus der DE-A-30 32 637 bekannt, mehrere Kupplungselemente käfiglos im Ringraum anzuordnen. Die diesbezüglichen Lösungen sind aber insofern nicht gattungsgemäss, als eine den Ringraum entsprechend kreuzende Blattfeder fehlt. Vielmehr sind die Rollkörper-Kupplungselemente aus elastischem, zusammendrückbarem Material gestaltet, und das Innere der beiden konzentrisch angeordneten Abtriebs/Antriebselemente besitzt eine sekantenförmige Abflachung. Bei diesen Lösungen ist der Verschleiss sehr hoch wegen der ständigen Walkbewegung auf die Kupplungselemente, und es lassen sich auch keine höheren Drehmomente übertragen, geschweige denn lässt sich ein definierter, aber trotzdem weich einsetzender Überlast-Entkupplungspunkt verwirklichen.

Dem Gegenstand der Erfindung liegt die Aufgabe zugrunde, eine Überlastsicherung der vorausgesetzten Art in herstellungstechnisch einfacher Weise so auszugestalten, dass unter Vermeidung, insbesondere der vorerwähnten Nachteile, bei kleiner Bauform eine zuverlässige Funktionsweise gegeben ist.

Gelöst wird diese Aufgabe durch die im Hauptanspruch angegebene Erfindung. Der Unteranspruch stellt eine vorteilhafte Weiterbildung dar.

Zufolge dieser Ausgestaltung ist eine äusserst einfache, wenig Bauteile erfordernde, verschleissarme Überlastsicherung gegeben, die wegen geringer Reibungsverluste und erheblicher Gewichtseinsparung vor allem auch im Bereich hochtourig laufender Aggregate einsetzbar ist. Der Erfindung liegt die Erkenntnis zugrunde, dass man den Rollkörper innerhalb des Ringraumes zusätzlich zu den Ringraumwänden nicht weiter fesseln muss. Selbst in seinen Überlast-Schalt-Bewegungen ist es nicht notwendig, den Rollkörper noch weiter durch einen Käfig in seinen Freiheitsgraden zu beschränken. Zufolge des entsprechenden Freiheitsgrades des Rollkörpers ist er dabei optimal geeignet, mit den mehreren hintereinanderliegenden Blattfeder-Abschnitten zusammenzuarbeiten, ohne dass er z.B. nach Vorbeitritt am ersten Abschnitt durch eine mitbewegte Masse eines Käfiges eine die Entkupplungsbedingungen verfälschende grössere kinematische Energie besitzen würde. Dass der Ringraum einen nach aussen gerichteten Ausweichraum für den Rollkörper besitzt, bewirkt, dass unmittelbar nach Ausrücken der Überlastsicherung ein Umlaufen des Rollkörpers verhindert ist. Er tritt auch zufolge seines Freiheitsgrades in den Ausweichraum und in seine Kupplungsfunktion erst wieder beim erneuten Einschalten der Drehbewegung des Antriebselementes.

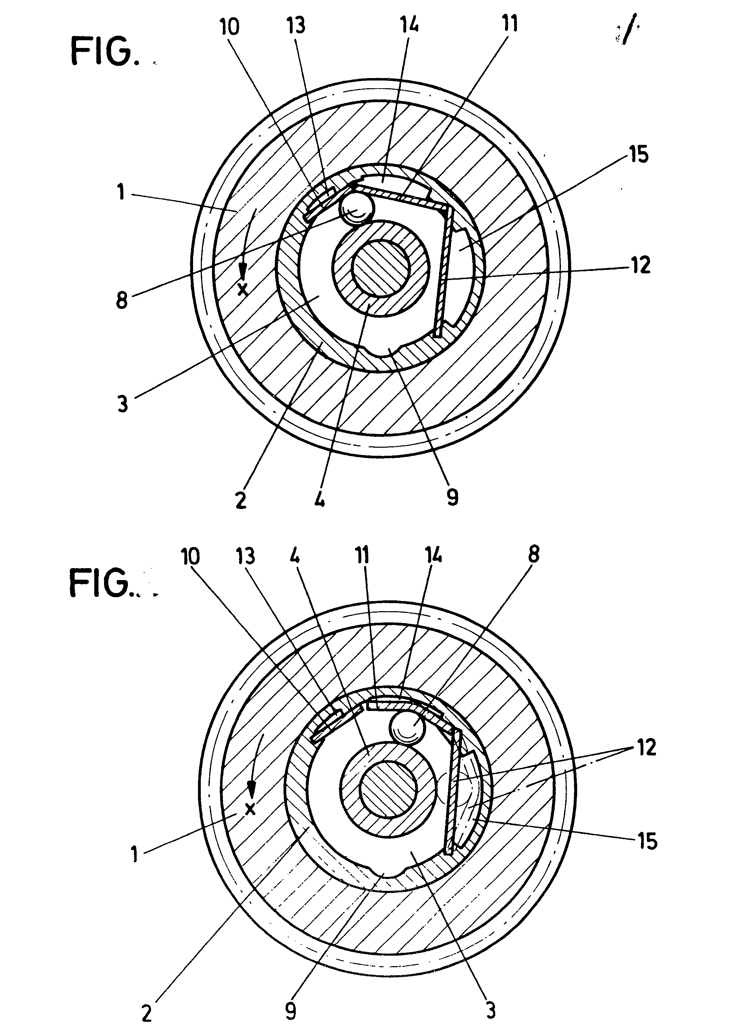

Nachstehend wird ein Ausführungsbeispiel der Erfindung anhand der Fig. 1 und 2 erläutert. Es zeigt

Fig. 1 einen Querschnitt durch die Kupplung, welche mehrere winklig zueinander liegende Blattfedern besitzt, und zwar bei in Kupplungsstellung befindlichem Rollkörper und

Fig. 2 den der Fig. 1 entsprechenden Schnitt, wobei der Rollkörper den mittleren Federungsabschnitt ausdrückt,

Gemäss der in den Fig. 1 und 2 dargestellten Ausführungsform ist mit der Ziffer 1 ein Zahnrad bezeichnet, welches von einer nicht dargestellten Getriebeeinheit eines elektrischen Kleingerätes in Pfeilrichtung X in Umdrehung versetzt wird. Dieses Zahnrad 1 sitzt drehfest auf einem von einer Büchse gebildeten Antriebselement 2, welches unter Belassung eines Ringraumes 3 konzentrisch zu einem ringartigen Abtriebselement 4 angeordnet ist. Der Querschnitt des Ringraumes 3 ist durch drei winklig zueinander liegende Blattfedern 10, 11, 12 reduziert.

In dem Ringraum 3 liegt frei ein diesem im Durchmesser angepasster Rollkörper 8 ein. Letzterer ist als Kugel ausgebildet.

Wird das Zahnrad 1 in Pfeilrichtung X angetrieben, so gelangt der Rollkörper 8 beim Einschaltruck in die verkeilende Stellung zwischen den ersten Federungsabschnitt 10 und Abtriebselement 4. Dann erfolgt eine schlupffreie Übertragung der Antriebsleistung auf das Abtriebselement 4. Wird das Grenzmoment, bspw. durch einen grösseren Widerstand am Abtriebselement 4 erreicht, so überwindet der Rollkörper 8 den Federungsabschnitt 10, indem er diesen in den Schlitz 13 ausdrückt.

Es sind drei winklig zueinander liegende Blattfedern 10, 11 und 12 vorgesehen. Jeder Blattfeder 10, 11, 12 kommt ein eigener Ausweich-Schlitz 13, 14, 15 zu. Sowohl die Blattfedern 10–12 als auch die Ausweich-Schlitze 13–15 weisen unterschiedliche Länge auf. Auf diese Weise ist es möglich, dass die kürzeste Blattfeder 10 eine geringere Querschnittsreduzierung des Ringraumes 3 bewirkt. Die nachfolgenden Blattfedern 11, 12 führen zu einer stufenförmigen Querschnittsreduzierung des Ringraumes 3, wobei die Querschnittsreduzierung im Bereich der Blattfeder 12 am grössten ist. Der Rollkörper 8 muss daher die hintereinanderliegenden Querschnittsreduzierungen überwinden. Hat er sämtliche durch die Blattfedern 10–12 bewirkten Querschnittsreduzierungen hinter sich, gelangt er in einen nachgeordneten Ausweichraum 9.

**Patentansprüche**

1. Überlastsicherung an Kupplungen, mit konzentrisch zueinander angeordnetem Antriebs- und Abtriebselement (2, 4) und mit zwischen beiden angeordnetem Ringraum (3), in welchem ein Rollkörper (8) als Kupplungselement vorgesehen ist, welcher mit mindestens einer sich im Ringraum (3) erstreckender Blattfeder (10, 11, 12) zusammenwirkt derart, dass durch Ausbiegung des den Ringraum (3) kreuzenden Blattfederabschnittes (10, 11, 12) eine Entkupplung erfolgt, dadurch gekennzeichnet, dass der Rollkörper (8) käfiglos im Ringraum (3) einliegt und mehrere winklig zueinander liegende Blattfederabschnitte (10, 11, 12) in Umfangsrichtung des Ringraumes (3) hintereinanderliegend vorgesehen sind.

2. Überlastsicherung nach Anspruch 1, dadurch gekennzeichnet, dass der Ringraum (3) einen nach aussen gerichteten Ausweichraum (9) für den Rollkörper (8) aufweist.

**Revendications**

1. Dispositif protecteur contre les surcharges agissant sur des accouplements, comportant des organes d'entraînement concentriques d'entrée (2) et de sortie (4), ainsi qu'une enceinte annulaire (3) définie entre eux, dans laquelle est prévu un corps de roulement (8) faisant fonction d'organe d'accouplement et coopérant avec au moins une lame de ressort (10, 11, 12) disposée dans l'enceinte annulaire (3), de façon telle qu'il se produise un désaccouplement par flexion du segment de lame de ressort (10, 11, 12) qui traverse l'enceinte annulaire (3), caractérisé en ce que le corps de roulement (8) est disposé sans cage dans l'enceinte annulaire (3), et en ce que plusieurs lames de ressort (10, 11, 12) sont disposées l'une derrière l'autre dans la direction périphérique de l'enceinte annulaire (3), de manière à former des angles entre elles.

2. Dispositif protecteur contre les surcharges selon la revendication 1, caractérisé en ce que l'enceinte annulaire (3) présente un évidement de retrait (9) dirigé vers l'extérieur et susceptible de recevoir le corps de roulement (8).

**Claims**

1. An overload safety device on couplings having driving and driven members (2, 4) arranged concentrically with one another and having an annular space (3) arranged between the two in which a rolling body (8) is provided as a coupling member which cooperates with at least one leaf spring (10, 11, 12) which extends in the annular space (3), in such a way that through bending out of the portion (10, 11, 12) of leaf spring crossing the annular space (3) uncoupling is effected, characterized in that the rolling body lies in the annular space (3) without a cage and a number of portions (10, 11, 12) of leaf spring lying at angles to one another are provided lying one behind the other in the direction circumferential to the annular space (3).

2. An overload safety device as in Claim 1, characterized in that the annular space (3) exhibits an outwards directed escape space (9) for the rolling body (8).

FIG.

1
8
3
10  13  14  11
15
12
2  4  9

FIG.

10  13  4  11  14  8
1
12
15
2  9  3